**Europäisches Patentamt**

**European Patent Office**

**Office européen des brevets**

(19)

(11) Veröffentlichungsnummer: **0 109 591**
**B1**

(12) **EUROPÄISCHE PATENTSCHRIFT**

(45) Veröffentlichungstag der Patentschrift:
02.04.86

(21) Anmeldenummer: 83111021.8

(22) Anmeldetag: 04.11.83

(51) Int. Cl.⁴: **C 04 B 41/85, C 03 C 17/44,**
**B 28 B 11/04**

(54) **Verfahren zum Herstellen gemusterter Lüsterüberzüge auf Oberflächen von Körpern.**

(30) Priorität: 13.11.82 DE 3242069

(43) Veröffentlichungstag der Anmeldung:
30.05.84 Patentblatt 84/22

(45) Bekanntmachung des Hinweises auf die Patenterteilung:
02.04.86 Patentblatt 86/14

(84) Benannte Vertragsstaaten:
AT BE CH DE FR GB IT LI LU NL SE

(56) Entgegenhaltungen:
DE - A - 2 108 849
US - A - 3 932 681

CHEMICAL ABSTRACTS, Band 97, Nr. 6, August 1982,
Seite 254, Zusammenfassung 43040h, COLUMBUS,
OHIO (US),
CHEMICAL ABSTRACTS, Band 93, Nr. 18, November
1980, Seite 278, Zusammenfassung 172550r,
COLUMBUS, OHIO (US),

(73) Patentinhaber: **Wartenberg, Erwin W., Dr.,**
**Brunnenwiesen 6, D-7000 Stuttgart 71 (DE)**

(72) Erfinder: **Wartenberg, Erwin W., Dr., Brunnenwiesen 6,**
**D-7000 Stuttgart 71 (DE)**

(74) Vertreter: **Hoeger, Stellrecht & Partner,**
**Uhlandstrasse 14c, D-7000 Stuttgart 1 (DE)**

## Beschreibung

Die Erfindung bezieht sich auf ein Verfahren zum Herstellen gemusterter Lüsterüberzüge auf Oberflächen von Körpern aus glasierter Keramik, Glas oder Email nach dem Oberbegriff des Patentanspruchs 1.

Ein solches Verfahren ist aus der DE-C Nr. 2108849 bekannt. Dabei lassen sich Muster in Gestalt unterschiedlicher Farbgebungen beispielsweise dadurch erzielen, dass Teile des Körpers beim Erhitzen abgedeckt werden und somit nicht die Temperatur von oberhalb etwa 400° C erreichen. Es ist ferner aus der DE-B Nr. 2306474 bekannt, die für die Entwicklung der Lüsterfarben aus der Metall/Metalloxid-Schicht erforderliche Wärmezufuhr dadurch zu bewerkstelligen, dass man die aus dem Wärmeinhalt des vor der Tauchung erhitzten Körpers stammende Restwärme auf die Metall/Metalloxid-Schicht einwirken lässt.

Schliesslich ist es auch nicht mehr neu, in der Keramik-Dekorationstechnik durch Siebdruck Maskierungen aus hitzebeständigen Pasten herzustellen, welche die nicht zu dekorierenden Flächenteile abdecken, sowie derartige Maskierungen anschliessend durch Bürsten unter Zugabe von Wasser wieder zu entfernen („Chemical Abstracts" B. 93, S. 278, Zusammenfassung 172550r; „Chemical Abstracts", B. 97, S. 254, Zusammenfassung 43040h; US-A Nr. 3932681).

Derartige Maskierungstechniken wurden bei dem gattungsgemässen Verfahren zur Herstellung von Lüsterfarben, insbesondere auf glasierter Keramik, bisher noch nicht eingesetzt, möglicherweise deswegen, weil man der Ansicht war, eine Maskierung aus Siebdruck-Paste würde einen Tauchvorgang in einer Flüssigkeit nicht überstehen, ohne Schaden zu nehmen. Ausserdem ist das bekannte Nassabbürsten der Siebdruck-Paste deswegen von Nachteil, weil die dabei entstehende Schlemmflüssigkeit die dekorierten Körper nachteilig beeinflussen kann und eine solche Nassbehandlung im Hinblick auf Kosten, Arbeitszeit und Energieaufwand nicht erstrebenswert ist.

Es ist Aufgabe der Erfindung, ein einfaches und wirksames Verfahren zum Herstellen gemusterter Lüsterüberzüge auf Oberflächen von Körpern aus glasierter Keramik, Glas oder Email, insbesondere Fliesen, anzugeben, das sich in reproduzierbarer und kostengünstiger Weise industriell einsetzen lässt.

Die Aufgabe wird erfindungsgemäss durch die kennzeichnenden Merkmale des Patentanspruchs 1 gelöst.

Dabei hat sich in unerwarteter Weise gezeigt, dass die zur Maskierung verwendete Siebdruckpaste durch das Eintauchen in die heisse Flüssigkeit nicht zerstört wird, sondern im Gegenteil so modifiziert wird, dass anschliessend ein trockenes Abbürsten der Paste möglich ist.

Die nachstehende Beschreibung dient im Zusammenhang mit beiliegender Zeichnung der weiteren Erläuterung der Erfindung. Es zeigen:

Fig. 1 schematisch eine Anlage zum Herstellen gemusterter Lüsterüberzüge auf den Oberflächen glasierter Fliesen;

Fig. 2 eine unbehandelte Fliese;

Fig. 3 die durch Siebdruck-Paste mit dem Negativ der herzustellenden Musterung abgedeckte Fliese aus Fig. 2, und

Fig. 4 die fertig behandelte, mit einem gemusterten Lüsterüberzug versehene Fliese aus Fig. 2 und 3.

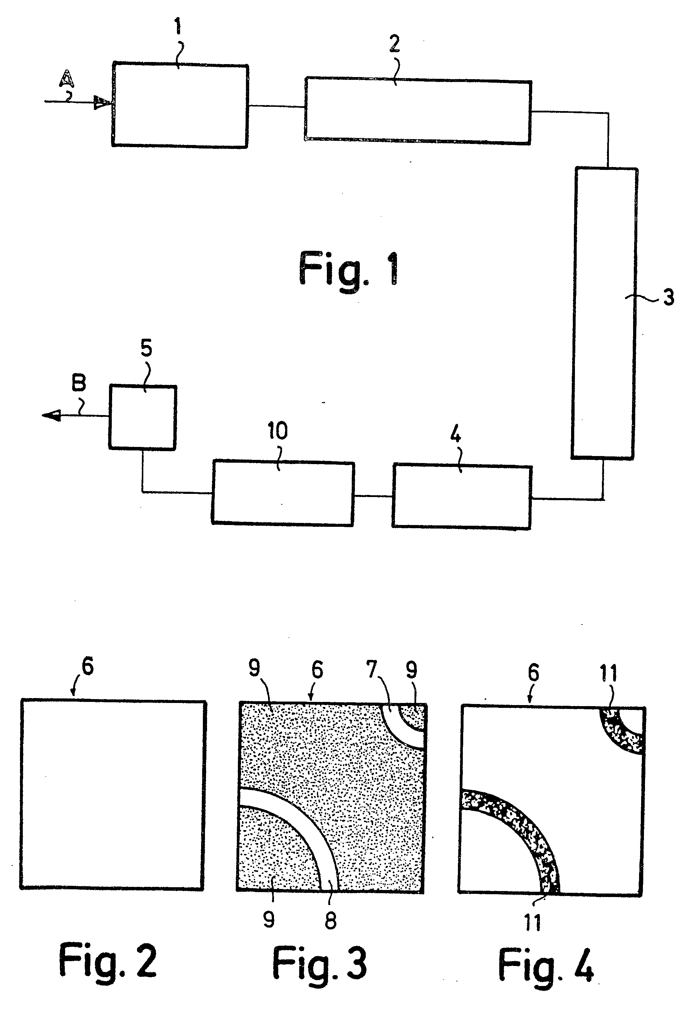

In Fig. 1 ist eine an sich bekannte Siebdruckmaschine 1, beispielsweise der Firma Cibec, 41049 Sassuolo (Italien), schematisch dargestellt. An die Siebdruckmaschine 1 schliesst sich eine Trockenstrecke 2 für die in der Siebdruckmaschine 1 aufgebrachte Siebdruck-Paste an. In einem Durchlaufofen 3 können Gegenstände auf eine Temperatur oberhalb etwa 400° C, beispielsweise zwischen 450 und 550° C, aufgeheizt werden. Mit dem Bezugszeichen 4 ist ein Tauchbad bezeichnet, welches eine Lösung wenigstens einer pyrolytisch zersetzlichen Verbindung eines in mehreren Wertigkeiten existenten Metalls enthält. Die Lösung ist bis auf eine Temperatur unterhalb ihres Siedepunktes vorgewärmt. Hinter dem Tauchbad 4 ist eine Bürstmaschine 5 angeordnet, die beispielsweise rotierend angetriebene Bürstwalzen enthält. Vor der Bürstmaschine 5 liegt eine z. B. mit Kühlgebläsen bestückte Kühlstrecke 10.

Die Anlage gemäss Fig. 1 ist dazu bestimmt, auf rechteckige, vorzugsweise quadratische Fliesen, wie in Fig. 2 dargestellt, einen gemusterten Lüsterüberzug aufzubringen. Das Muster des Lüsterüberzuges soll beispielsweise die aus Fig. 3 und 4 ersichtliche, zwei kreisbogenförmige Streifen umfassende Gestaltung haben. Durch Abänderung der Siebdruckanlage können nach demselben Prinzip auch Teller oder andere Hohlkörper, z. B. Vasen, dekoriert werden.

Die sauberen, z. B. einfarbigen Fliesen 6 werden in Richtung des Pfeiles A mittels einer Fördervorrichtung in die Siebdruckmaschine 1 aufgegeben, wo auf ihre glasierte Oberseite eine Maskierung durch Siebdruck-Paste in herkömmlicher Weise aufgebracht wird. Die Maskierung hat dabei die Gestalt des Negativs der herzustellenden Musterung, d. h. die mit einem Lüsterüberzug zu überziehenden Teilbereiche 7, 8 sind von der Siebdruck-Paste 9 nicht abgedeckt. In diesen Teilbereichen 7, 8 liegt vielmehr die glasierte Oberfläche der Fliese 6 frei zutage. Die Siebdruck-Paste 9 trocknet, wenn die teilweise von ihr abgedeckte Fliese 6 nach dem Verlassen der Siebdruckmaschine 1 die Trockenstrecke 2 durchläuft. Im elektrisch beheizten Ofen 3 wird die mit dem Negativ der Musterung teilweise abgedeckte Fliese 6 auf eine Temperatur oberhalb etwa 400° C, beispielsweise 550° C, erhitzt und anschliessend in das Tauchbad 4 überführt. Fördervorrichtungen, beispielsweise Kettenförderer, sorgen für einen automatischen Transport der Fliesen durch die aufeinanderfolgenden Stationen der Anlage. Im Tauchbad 4 bildet sich um die eingetauchte, erhitzte Fliese herum aufgrund der verdampfenden Flüssigkeit und des Leidenfrostschen Phänomens ein Gasmantel, der sowohl Lösungsmittelmoleküle als auch die Mole-

küle der gelösten Metallverbindungen enthält. Die Moleküle der Metallverbindungen zersetzen sich pyrolytisch an der freiliegenden, von der Siebdruck-Paste nicht abgedeckten Oberfläche der Fliese und bilden dort eine gleichmässige, dünne Schicht eines Gemisches aus Metall und Metalloxidphasen. Die Schichtdicke liegt in der Grössenordnung der Wellenlänge des Lichtes. Sie kann durch Einstellung der Konzentration der Metallverbindungen im Tauchbad und/oder durch Einstellung der Temperatur des zu beschichtenden Körpers reguliert werden. Die Regulierung der Schichtdicke ist wesentlich, weil durch sie die zu erzielende Farbwirkung mit bestimmt ist.

Nach kurzer Zeit, beispielsweise 1 bis 20 s, werden die Fliesen 6 aus dem Tauchbad 4 wieder herausgeführt und in die umgebende Atmosphäre verbracht. Dort, wo sich die Metall/Metalloxid-Schicht abgesetzt hat, hat sich die Fliese 6 oberflächlich abgekühlt. Nach Verlassen des Tauchbades 4 bewirkt nun die in der Fliese noch enthaltene Restwärme eine rasche Aufheizung der Fliese und der aufgebrachten Metall/Metalloxid-Schicht. Im Verlauf dieser Erhitzung bildet sich infolge von Re-docprozessen und Phasenumwandlungen in den nicht maskierten Bereichen 7, 8 der Fliese 6 die gewünschte Lüsterfarbe aus, die in Fig. 4 mit 11 bezeichnet ist.

Nach Ausbildung der Lüsterfarbe und Kühlung auf der Strecke 10 wird die zum Zwecke der Maskierung benutzte Siebdruck-Paste in der Bürstmaschine 5 trocken, also ohne Zugabe einer Reinigungsflüssigkeit, abgebürstet, so dass die in Fig. 4 dargestellte, mit einem gemusterten Lüsterüberzug versehene Fliese entsteht. Die ursprüngliche Fliese gemäss Fig. 2 kann beispielsweise weiss sein, während die Lüsterfarbe 11 ein gold- oder silberglänzendes Aussehen aufweisen kann. Auch ein Abwaschen der Paste mit Flüssigkeit wäre möglich.

Der Kern der Erfindung besteht darin, dass man im Siebdruckverfahren nicht die Mustergestalt als solche, sondern deren Negativ auf die Oberfläche des zu musternden Körpers aufbringt und hierdurch eine Beschichtung der durch die Paste maskierten Oberflächenteile im Tauchbad 4 verhindert, so dass die gewünschte Musterung gerade an den nicht abgedeckten Oberflächenbereichen des Körpers entsteht.

Ein wesentliches Element der Erfindung besteht ferner darin, dass die Siebdruck-Paste der Hitzebehandlung im Ofen oberhalb 400° C und der Flüssigkeitsbehandlung im Tauchbad ohne Ablösen widersteht, bei Abkühlung der Fliese jedoch trocken von der Fliesenoberfläche abgebürstet werden kann. Dies wird durch die Zusammensetzung der Siebdruck-Paste erreicht.

Die Siebdruck-Paste kann aus einem flüssigen Trägermedium bestehen, in welches eine feinge-pulverte, anorganische Abdecksubstanz von blätt-rig-kristalliner Struktur und ein ebenfalls feingepulverter Haftvermittler in einer Konzentration eingemischt sind, dass die Paste die für die Durchführung des Siebdruckes erforderliche Konsistenz hat. Als Abdecksubstanz erwiesen sich Silikate, insbesondere Magnesiumsilikat (Talkum), als geeignet. Der Haftvermittler kann ein Silikat mit Netzstruktur, insbesondere Titansilikat oder ein Silikat von seltenen Erden, vorzugsweise Zirkonsilikat, sein. Als Trägermedium erwies sich Wasser, Alkohol oder ein übliches Siebdrucköl unter Zusatz von Tensiden als geeignet.

Die Bürsten der Maschine 5 sind vorzugsweise mit Kunststoffborsten ausgerüstet.

Als Lösungsmittel für das Tauchbad 4 eignen sich organische Flüssigkeiten, vorzugsweise halogenierte Kohlenwasserstoffe, Alkohole oder Chlorbenzol. Als pyrolytisch zersetzliche Metallverbindungen kommen für das Tauchbad 4 insbesondere in Frage: ein oder mehrere Karbonyle, beispielsweise Eisen-, Kupfer-, Chrom-, Molybdän-, Kobalt-, Nickelkarbonyle oder andere organische Metallverbindungen wie Acetylacetonate und Ester. Die Konzentration der Metallverbindung in der Lösung kann zwischen 0,01 und 5% liegen.

Im Ofen 3, der beispielsweise ein Muffelofen sein kann, wird der mit einem Lüsterüberzug zu versehende Körper auf eine solche Temperatur erhitzt, dass seine Oberfläche noch nicht auf-schmilzt. Nach dem erfindungsgemässen Verfah-ren können farbige Lüsterüberzüge auf Körpern aus glasiertem Porzellan, glasierter Keramik, Glas oder Email hergestellt werden.

*Beispiel 1:*

Eine ca. 5 mm dicke, einseitig glasierte, weisse Fliese mit einer Oberfläche von 11 × 11 cm wird in der Siebdruckmaschine 1 mit Siebdruck-Paste 9 gemäss Fig. 3 maskiert, wobei die Flächenbereiche 7, 8 der weissen Fliesenoberfläche freibleiben. Die so mit dem Negativ der herzustellenden Musterung beschichtete Fliese wird im Ofen 3 auf ca. 550° C erhitzt und anschliessend im Tauchbad 4 in eine 0,5%ige Lösung von Eisenpentakarbonyl in Butanol für eine Zeit von 3 s eingetaucht. Es bildet sich auf den Flächenbereichen 7, 8 ein dunkelgrauer bis schwarzer Überzug, der unmittelbar beim Herausführen der Fliese aus dem Tauchbad aufgrund des Restwärmeinhalts der Fliese, der die Flächenbereiche 7, 8 wieder aufheizt, innerhalb einiger Sekunden seine Farbe in goldgelb ändert.

*Beispiel 2:*

Das Vorgehen nach Beispiel 1 wird wiederholt, wobei jedoch im Tauchbad 4 eine 3%ige Eisenpentakarbonyl-Lösung in Butanol verwendet wird. Es entsteht ein tiefroter Lüsterüberzug.

Die für die Hervorrufung der Lüsterfarben erforderliche Wärmezufuhr braucht nicht unbedingt aus der Restwärme des aus dem Tauchbad 4 herausgenommenen Körpers zu stammen. Zwischen Tauchbad 4 und Kühlstrecke 10 kann auch eine weitere Wärmequelle, beispielsweise ein Durchlaufofen, vorgesehen werden, in welcher der Körper auf die für die Erzeugung unterschiedlicher Lüsterfarben erforderliche Temperatur gebracht wird.

**Patentansprüche**

1. Verfahren zum Herstellen gemusterter Lüsterüberzüge auf Oberflächen von Körpern aus glasierter Keramik, Glas oder Email unter Benutzung einer der herzustellenden Musterung entsprechenden Abdeckung, wobei der Körper auf eine Temperatur oberhalb etwa 400° C erhitzt und der erhitzte Körper in eine unterhalb der Temperatur des Körpers gehaltene Lösung einer Metallverbindung getaucht wird, die mit der Oberfläche des erhitzten Körpers zu einer dünnen Schicht aus dem Metall und Oxiden des Metalls chemisch reagiert und schliesslich in der Metall/Metalloxid-Schicht des durch die Tauchung oberflächlich abgekühlten Körpers durch Wärmezufuhr Lüsterfarben hervorgerufen werden, gekennzeichnet durch folgende Merkmale:

a) auf die Oberfläche des Körpers wird mittels einer durch Siebdruck aufgebrachten Paste ein Negativ der Musterung erzeugt, wobei die Paste in einem flüssigen Trägermedium eine feingepulverte, anorganische Abdecksubstanz von blättrigkristalliner Struktur und einen ebenfalls feingepulverten Haftvermittler umfasst, welcher eine haftende Verbindung zwischen der Oberfläche des Körpers und der Abdecksubstanz erzeugt;

b) der mit diesem Musternegativ versehene Körper wird auf die Temperatur oberhalb 400° C erhitzt;

c) der erhitzte und mit dem Musternegativ aus der Paste versehene Körper wird in die Lösung der Metallverbindung getaucht, die mit der durch die Paste nicht abgedeckten Oberfläche des Körpers zu der dünnen Metall/Metalloxid-Schicht reagiert;

d) nach Ausbildung der Lüsterfarben in den nicht durch die Paste abgedeckten Teilen der Oberfläche wird die das Musternegativ bildende Paste durch trockenes Abbürsten ohne Zugabe einer Reinigungsflüssigkeit vom Körper entfernt.

2. Verfahren nach Anspruch 1, dadurch gekennzeichnet, dass die Abdecksubstanz ein Silikat, insbesondere Magnesiumsilikat (Talkum) ist.

3. Verfahren nach Anspruch 1, dadurch gekennzeichnet, dass der Haftvermittler ein Silikat mit Netzstruktur, insbesondere Titansilikat oder ein Silikat seltener Erden oder Zirkonsilikat ist.

4. Verfahren nach Anspruch 1, dadurch gekennzeichnet, dass das Trägermedium aus Wasser und/oder Alkoholen und/oder Siebdrucköl besteht.

**Claims**

1. A method of producing patterned lustre coatings on surfaces of bodies of glazed ceramic material, glass or enamel while using a masking which corresponds to the patterning to be produced, in which the body is heated to a temperature above approximately 400° C and the heated body is immersed in a solution — maintained below the temperature of the body — of a metal compound which reacts chemically with the surface of the heated body to form a fine layer of the metal and oxides of the metal, and finally, by supplying heat, lustre dyes are produced in the metal/metal oxide layer of the body cooled on its surface by the immersion, characterized by the following features:

(a) a negative of the patterning is produced on the surface of the body by means of a paste applied by screen printing, the paste comprising, in a liquid carrier medium, a finely powdered inorganic masking substance of laminar-crystalline structure and a likewise finely powdered adhesive agent which forms an adhesive joint between the surface of the body and the masking substance;

(b) the body provided with this pattern negative is heated to a temperature above 400° C;

(c) the heated body provided with the pattern negative from the paste is immersed in the solution of the metal compound which reacts with the surface of the body not masked by the paste to form the thin metal/metal oxide layer;

(d) after the lustre dyes have been produced in the parts of the surface not masked by the paste, the paste forming the pattern negative is removed from the body by dry brushing-off without the addition of a cleaning liquid.

2. A method according to Claim 1, characterized in that the masking substance is a silicate, in particular magnesium silicate (talc).

3. A method according to Claim 1, characterized in that the adhesive agent is a silicate with a reticular structure, in particular titanium silicate or a rare-earth silicate or zirconium silicate.

4. A method according to Claim 1, characterized in that the carrier medium consists of water and/or alcohols and/or screen-printing oil.

**Revendications**

1. Procédé de fabrication de revêtements de lustrage à motifs sur des surfaces de corps en céramique vernie, en verre ou en émail en utilisant un recouvrement correspondant au motif à réaliser, le corps étant chauffé à une température dépassant 400° C environ et le corps réchauffé étant plongé dans une solution d'une combinaison métallique maintenue à une température inférieure à celle du corps, réagissant chimiquement avec la surface du corps chauffé pour former une mince couche de métal et d'oxyde de métal pour obtenir finalement par amenée de chaleur des couleurs de lustrage dans la couche de métal/oxyde métallique du corps refroidi à la surface par l'immersion, caractérisé en ce que:

a) on produit à la surface du corps un négatif du motif à l'aide d'une pâte appliquée par sérigraphie, la pâte comprenant dans un agent de base liquide une substance de revêtement inorganique à poudre fine de structure lamellaire cristalline et un agent d'adhérence également à poudre fine qui crée une adhérence entre la surface du corps et la substance de revêtement;

b) le corps recouvert de ce négatif du motif est chauffé à une température supérieure à 400° C;

c) le corps réchauffé et recouvert du négatif obtenu avec la pâte est plongé dans la solution de la combinaison métallique qui réagit avec la surface du corps non recouverte par la pâte pour former une fine couche de métal/oxyde métallique;

d) après apparition des couleurs de lustrage dans les parties de la surface non recouvertes par la pâte, cette dernière formant le négatif du motif est enlevée du corps par brossage à sec sans ajouter de liquide de nettoyage.

2. Procédé selon la revendication 1, caractérisé en ce que la substance de revêtement est un silicate, notamment un silicate de magnésium.

3. Procédé selon la revendication 1, caractérisé en ce que l'agent d'adhérence est un silicate à structure réticulaire, notamment un silicate de titane, de terres rares ou de zirconium.

4. Procédé selon la revendication 1, caractérisé en ce que l'agent de base se compose d'eau et/ou d'alcools et/ou d'huile de sérigraphie.

0 109 591

## Fig. 1

## Fig. 2

## Fig. 3

## Fig. 4

7